(19) Europäisches Patentamt
European Patent Office
Office européen des brevets

(11) **EP 3 015 962 A1**

(12) **EUROPEAN PATENT APPLICATION**
published in accordance with Art. 153(4) EPC

(43) Date of publication:
**04.05.2016 Bulletin 2016/18**

(51) Int Cl.:
***G06F 3/044*** *(2006.01)*

(21) Application number: **14818186.0**

(22) Date of filing: **27.05.2014**

(86) International application number:
**PCT/KR2014/004695**

(87) International publication number:
**WO 2014/208898 (31.12.2014 Gazette 2014/53)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **27.06.2013 KR 20130074799
03.04.2014 KR 20140039974**

(71) Applicant: **Crucialtec Co., Ltd.
Asan-si, Chungcheongnam-do 336-795 (KR)**

(72) Inventors:
• **KIM, Dong Woon**
  **Seoul 137-930 (KR)**
• **JEONG, Byung Chul**
  **Seoul 137-770 (KR)**

(74) Representative: **Isarpatent
Patent- und Rechtsanwälte Behnisch Barth
Charles
Hassa Peckmann & Partner mbB
Friedrichstrasse 31
80801 München (DE)**

(54) **APPARATUS FOR DETECTING TOUCH**

(57)    One embodiment of the present invention provides an apparatus for detecting a touch, the apparatus comprising: a plurality of sensor pads for forming touch capacitance in relation to a touch input tool; an operation amplifier for outputting different signals according to whether a touch is made, the operation amplifier having a first input end connected with a first sensor pad selected from the sensor pads; driving capacitance connected between the first input end and an output end of the operation amplifier, potentials of both ends of the operation amplifier being controlled by a switch; and a pulse signal supply unit for supplying a signal having a predetermined potential to a second input end of the operation amplifier during at least some intervals in which the switch is switched to an off state from an on state and is maintained in the off state.

[Fig. 5]

**Description**

[Technical Field]

The present invention relates to an apparatus for detecting touch, more specifically to an apparatus for detecting touch minimizing the effect of parasitic capacitance when detecting whether a touch is made even with a simplified circuit configuration.

[Background Art]

A touchscreen panel is a device for inputting user command by touching letters or diagrams displayed on the screen of an image display device with a human finger or other touch means, which is used attached to an image display device. The touchscreen panel converts the touch location touched with the human finger, etc. into electrical signals. The electrical signal is used as an input signal.

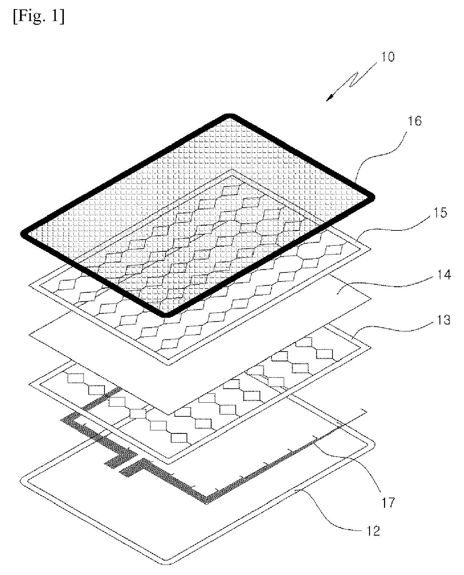

Fig. 1 is an exploded plan view of an embodiment of the capacitive touchscreen panel according to conventional art.

Referring to Fig. 1, a touchscreen panel 10 includes a transparent substrate 12, and a first sensor pattern layer 13, a first insulating layer 14, a second sensor pattern layer 15, and a second insulating layer 16 formed in order on the transparent substrate 12, and a metal wiring 17.

The first sensor pattern layer 13 may be connected along the lateral direction on the transparent substrate 12, and may be connected with the metal wiring 17 in the unit of rows.

The second sensor pattern layer 15 may be connected along the longitudinal direction on the first insulating layer 14, and disposed alternately with the first sensor pattern layer 13 so as not to overlap with the first sensor pattern layer 13. Also, the second sensor pattern layer 15 is connected with the metal wiring 17 in the unit of columns.

When a human finger or a touch means touches the touchscreen panel 10, the change in capacitance according to touch location is delivered to the driving circuit through the first and second sensor pattern layers 13 and 15, and metal wiring 17. Also, the touch location is identified as the change in capacitance delivered as above is converted into an electrical signal.

However, each sensor pattern layer 13 and 15 of the touchscreen panel 10 should have a pattern made of transparent conductive materials such as indium-tin oxide (ITO), separately, and there should be an insulating layer 14 between the sensor pattern layers 13 and 15. Accordingly, the thickness increases.

Also, since touch may be detected only after accumulating the minute changes in capacitance generated by touch several times, the change in capacitance is to be detected with high frequency. Further, in order to accumulate enough change in capacitance within a predetermined time, a metal wiring for maintaining low resistance is required. However, such metal wiring makes the bezel at the edge of the touchscreen thick and causes an additional mask process to occur.

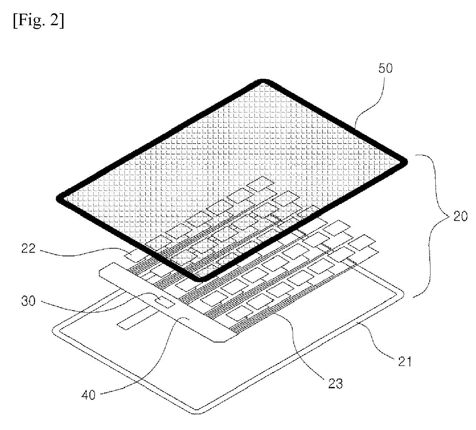

In order to solve this problem, an apparatus for detecting touch was suggested as illustrated in Fig. 2.

The apparatus for detecting touch illustrated in Fig. 2 includes a touch panel 20, a driving device 30, and a circuit board 40 connecting the two.

The touch panel 20 is formed on a substrate 21, and includes a plurality of sensor pads 22 arranged in the form of a polygonal matrix, and a plurality of signal wirings 23 connected with the sensor pad 22.

For each signal wiring 23, one end is connected with a sensor pad 22 and the other end protrudes to the lower edge of the substrate 21. The sensor pad 22 and signal wiring 23 may be patterned on the cover glass 50.

The driving device 30 selects one of the plurality of sensor pads 22 after the other, and measures the capacitance of the corresponding sensor pad 22. Accordingly, it detects whether a touch is made.

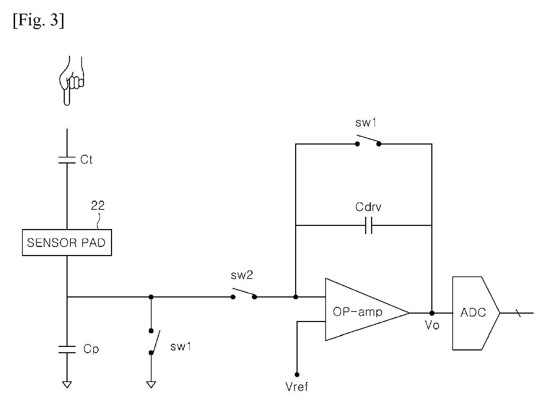

Fig. 3 is an equivalent circuit diagram for explaining the operation of detecting touch when a touch is made in the apparatus for detecting touch in Fig. 2.

Referring to Fig. 3, when a touch is made, touch capacitance Ct is formed between the touch generating tool (e.g., finger) and sensor pad 22. The sensor pad 22 is optionally connected with ground voltage by a first switch SW1, and is optionally connected with the first input end of the operation amplifier OP-amp through a second switch SW2. Driving capacitance Cdrv is formed between the first input end and the output end of the operation amplifier OP-amp, and the first switch SW1 is connected with both ends of the driving capacitance Cdrv. Also, reference voltage Vref is input to the second input end of the operation amplifier OP-amp. Meanwhile, unknown parasitic capacitance Cp is formed at the sensor pad 22.

A method for detecting touch of the apparatus for detecting touch is explained in the following.

First, when the first switch SW1 is in an on state, the sensor pad 22 is connected with the ground voltage and reset, and both ends of the driving capacitance Vdrv become potentiodynamic and reset.

When the first switch SW1 is in an off state and the second switch SW2 is in an on state, the potential of the first input end of the operation amplifier OP-amp becomes the same as the reference voltage Vref. When reaching steady state, both touch capacitance Ct and parasitic capacitance Cp become charged with reference voltage Vref. In this case, a charge the same as the amount of charge charged in touch capacitance Ct and parasitic capacitance Cp is charged in driving capacitance Cdrv.

The sum Q1 of charge charged in touch capacitance Ct and parasitic capacitance Cp is as shown below.

Equation 1

$$Q_1 = V_{ref}(C_t + C_p)$$

Meanwhile, the potential difference Vdrv between both ends of the driving capacitance Cdrv is as shown below. Here, Q2 is the amount of charge charged in driving capacitance Cdrv when the second switch SW2 reaches steady state after being switched to an on state.

Equation 2

$$Q_2 = V_{drv} \times C_{drv}$$

As mentioned in the above, since Q1 and Q2 become the same, when using Equation 1 and Equation 2, the potential difference Vdrv between both ends of the driving capacitance Cdrv is calculated as shown below.

Equation 3

$$V_{ref}(C_t + C_p) = V_{drv} \times C_{drv}$$

$$V_{drv} = \frac{V_{ref}(C_t + C_p)}{C_{drv}}$$

Before the second switch SW2 is turned on, the potential difference between both ends of the driving capacitance Cdrv is 0 V. Among the ends of the driving capacitance Cdrv, the potential of the node connected with the first input end of the operation amplifier OP-amp is maintained at reference voltage Vref. Thus, the change in voltage ΔVo of the output end of the operation amplifier OP-amp before and after touch becomes the same as the voltage Vdrv of both ends of the driving capacitance Cdrv after the second switch SW2 is turned on.

However, as can be seen from Equation 3, the level shift value ΔVo is affected by both touch capacitance Ct and parasitic capacitance Cp which should be known for detection. As a result, the accuracy of touch detection deteriorates.

Thus, it is necessary to develop a technique for removing factors affected by parasitic capacitance when detecting whether a touch is made.

[Disclosure]

[Technical Problem]

The present invention is to solve the above problems of conventional art, and it is a purpose of the present invention to minimize the effect of parasitic capacitance when detecting whether a touch is made even with a simplified circuit configuration.

[Technical Solution]

In order to achieve the above purpose, according to an embodiment of the present invention, the present invention provides an apparatus for detecting touch, the apparatus including a plurality of sensor pads for forming touch capacitance in relation to a touch input tool, an operation amplifier for outputting different signals according to whether a touch is made, the operation amplifier having a first input end connected with a first sensor pad selected from the sensor pads, driving capacitance connected between the first input end and an output end of the operation amplifier, potentials of both ends of the operation amplifier being controlled by a switch, and a pulse signal supply unit for supplying a signal having a predetermined potential to a second input end of the operation amplifier during at least some intervals in which the switch is switched to an off state from an on state and is maintained in the off state.

The apparatus for detecting touch may further include a parasitic capacitance compensation circuit for supplying charge to at least one of the touch capacitance or the parasitic capacitance sharing the amount of charge of the touch capacitance when the switch is in the off state.

The amount of charge supplied by the parasitic capacitance compensation circuit may be the same as the amount of charge charged in the parasitic capacitance when the switch is in the off state.

The parasitic capacitance compensation circuit may include a compensation amplifier for amplifying and outputting a pulse signal from the pulse signal supply unit and a compensation capacitance connected between an output end of the compensation amplifier and a first input end of the operation amplifier.

The pulse signal input unit may be connected with a first input end of the compensation amplifier, a first resistance may be connected between a second input end and an output end of the compensation amplifier, and a second resistance may be connected between a second input end of the compensation amplifier and a ground voltage.

The pulse signal supply unit may simultaneously supply the pulse signal to a second input end of the operation amplifier and a second sensor pad adjacent the first sensor pad.

The apparatus for detecting touch may further include a feedback operation amplifier for outputting a signal the same as the input signal, an output end thereof being connected with the second sensor pad, and the pulse signal supply unit being simultaneously connected with a second input end of the operation amplifier and a first input end of the feedback operation amplifier.

An additional switch operating in synchronization with the switch may be connected between the first sensor pad and the ground.

Meanwhile, according to another embodiment of the present invention, the present invention provides an apparatus for detecting touch, the apparatus including a plurality of sensor pads for forming touch capacitance in relation to a touch input tool, an operation amplifier for outputting different signals according to whether a touch is made, the operation amplifier having a first input end connected with a first sensor pad selected from the sensor pads, driving capacitance connected between the first input end and an output end of the operation amplifier, potentials of both ends of the operation amplifier being controlled by a switch, a feedback operation amplifier for outputting a signal the same as the input signal, an output end thereof being connected with a second sensor pad adjacent the first sensor pad, and a pulse signal supply unit for supplying a signal having a predetermined potential to a second input end of the operation amplifier and an input end of the feedback operation amplifier during at least some intervals in which the switch is switched to an off state from an on state and is maintained in the off state.

An input end of the feedback operation amplifier may be connected with the pulse signal supply unit, and a second input end may be connected with the second sensor pad together with an output end.

[Advantageous Effects]

According to an embodiment, by using the signal used for detecting whether a touch is made as a pulse signal, a signal is supplied only during an interval required for detecting whether a touch is made, and accordingly the formation of parasitic capacitance according to potential difference between circuit configurations may be minimized.

According to an embodiment, adjacent sensor pads receive the same pulse signal, and thus they always have the same potential. Accordingly, the effect of parasitic capacitance formed by the relation between sensor pads may be removed.

According to an embodiment, by including a circuit compensating the charge of parasitic capacitance formed by circuit configurations other than the sensor pad subject to touch detection, the effect of all parasitic capacitance may be minimized.

[Description of Drawings]

Fig. 1 is an exploded plan view of a conventional touchscreen panel;
Fig. 2 is an exploded plan view of a conventional apparatus for detecting touch;
Fig. 3 is a circuit diagram illustrating the configuration of a conventional apparatus for detecting touch;
Fig. 4 is a view illustrating the configuration of an apparatus for detecting touch according to an embodiment of the present invention;

Fig. 5 is a circuit diagram illustrating the configuration of an apparatus for detecting touch according to an embodiment of the present invention;

Fig. 6 is a timing diagram for explaining the operation of an apparatus for detecting touch according to an embodiment of the present invention;

Fig. 7 is a circuit diagram for explaining the operation of an apparatus for detecting touch according to another embodiment of the present invention; and

Fig. 8 is a circuit diagram for explaining the operation of an apparatus for detecting touch according to yet another embodiment of the present invention.

[Modes of the Invention]

Hereinafter, the terms used in the specification will be briefly described, and then the present invention will be described in detail.

The terms used in the present invention are those general terms currently widely used in the art in consideration of functions in regard to the present invention, but the terms may vary according to the intention of those of ordinary skill in the art, precedents, or new technology in the art. Also, specified terms may be selected by the applicant, and in this case, the detailed meaning thereof will be described in the detailed description of the invention. Thus, the terms used in the specification should be understood not as simple names but based on the meaning of the terms and the overall description of the invention.

Throughout the specification, it will also be understood that when a component "includes" an element, unless there is another opposite description thereto, it should be understood that the component does not exclude another element but may further include another element. In addition, terms such as "... unit," "... module," or the like refers to units that perform at least one function or operation, and the units may be implemented as hardware or software or as combination of hardware and software. Further, it will be understood that when an element is referred to as being "connected to" another element, it may be "directly connected to" the other element, or intervening elements or layers may be present.

Hereinafter, examples of the present invention will be explained with reference to the accompanying drawings to an extent to be easily carried out by a person having ordinary skill in the art. The present invention, however, may be modified in various different ways, and should not be construed as limited to the embodiments set forth herein. Also, in order to clearly explain the present disclosure, portions that are not related to the present disclosure are omitted, and like reference numerals are used to refer to like elements throughout.

Hereinafter, examples of the present invention will be explained in detail with reference to the accompanying drawings.

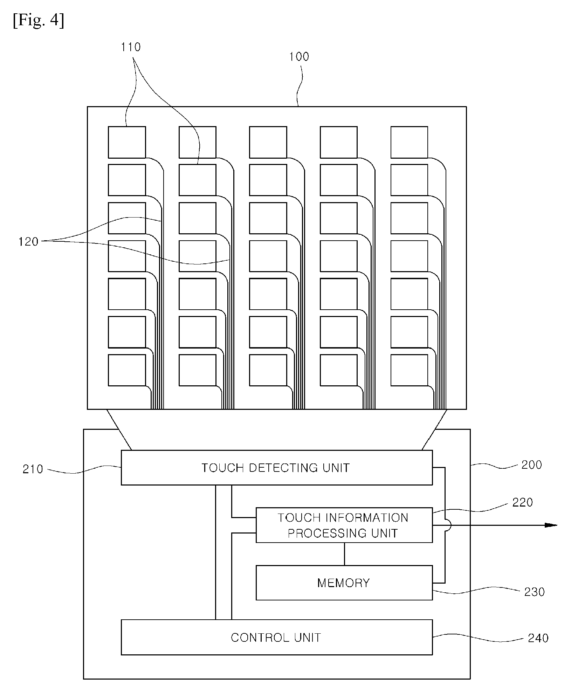

Fig. 4 is a view illustrating the configuration of an apparatus for detecting touch according to an embodiment of the present invention.

Referring to Fig. 4, the apparatus for detecting touch includes a touch panel 100 and a driving device 200.

A plurality of sensor pads 110 forming touch capacitance in relation with a touch input tool in a plurality of columns and rows is disposed on the touch panel 100, and each sensor pad 110 is connected with the driving device 200 through a signal wiring 120.

The sensor pad 110 may be a rectangle or lozenge, and may be any uniform polygonal form. The sensor pad 110 may be arranged in the form of a matrix of adjacent polygons.

The driving device 200 may include a touch detecting unit 210, a touch information processing unit 220, a memory 230 and a control unit 240, etc., and may be implemented with at least one integrated circuit (IC) chip.

The touch detecting unit 210, touch information processing unit 220, memory 230 and control unit 240 may be implemented being separate from each other, or may be implemented having at least two of the fs integrated.

The touch detecting unit 210 may include a plurality of switches and a plurality of capacitors. In this case, each switch is connected with each sensor pad 110 and signal wiring 120. The touch detecting unit 210 receives a control signal from the control unit 240 to drive circuits for detecting touch, and outputs voltage corresponding to touch detection result. Also, the touch detecting unit 210 may include an amplifier and an analogue-digital converter, converting, amplifying or digitizing the difference in voltage change of the sensor pad 110, to store it in the memory 230 as sensing data.

The touch information processing unit 220 processes the sensing data stored in the memory 230, and creates necessary information such as information on whether a touch is made, touch area, and touch coordinates, etc.

The memory 230 stores sensing data based on the difference in voltage change detected from the touch detecting unit 210, and stores predetermined data or real-time data used for detecting touch, calculating area, and calculating touch coordinates.

The control unit 240 controls the touch detecting unit 210 and touch information processing unit 220, and may include a micro control unit (MCU) and perform predetermined signal processing through firmware.

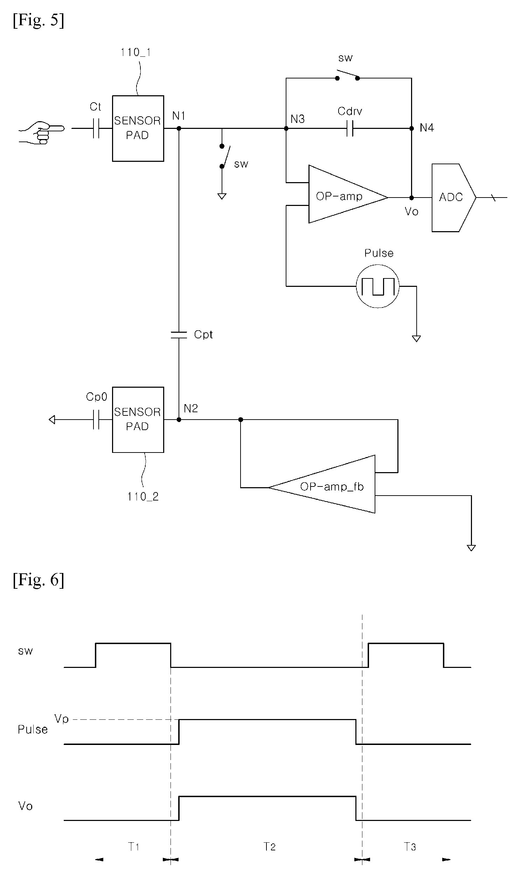

Fig. 5 is a circuit diagram illustrating the configuration of an apparatus for detecting touch according to an embodiment of the present invention. Fig. 6 is a timing diagram for explaining the operation of an apparatus for detecting touch illustrated in Fig. 5. Hereinafter, the operation of the apparatus for detecting touch illustrated in Fig. 5 is explained with reference to Fig. 5 and Fig. 6.

Fig. 5 illustrates the sensor pad 110_1 currently subject to touch detection and another sensor pad 110_2 adjacent thereto.

Referring to Fig. 5, touch capacitance Ct is formed between the touch generating tool and sensor pad 110_1. The sensor pad 110_1 is connected with the first input end N3 of the operation amplifier OP-amp. Also, the sensor pad 110_1 is optionally connected with the ground voltage by a switch SW. The operation amplifier OP-amp outputs different signals according to whether a touch is made at the sensor pad 110_1.

Drive capacitance Cdrv is formed between the first input end N3 and output end N4 of the operation amplifier OP-amp, and the switch SW is connected to both ends of the drive capacitance Cdrv. The potential of both ends of the drive capacitance Cdrv is controlled by the switch SW. As will be explained below, the switch SW connected between the first input end N3 and output end N4 of the operation amplifier OP-amp, and the switch SW switching the connection between the sensor pad 110_1 and ground voltage operate being synchronized with each other. The switch SW between the node N1 connected with the sensor pad 110_1 and the ground voltage may be omitted.

A pulse signal supply unit (pulse) is connected with the second input end of the operation amplifier OP-amp. As will be explained below, the pulse signal supply unit (pulse) plays the role of supplying a signal having a predetermined potential to a second input end of the operation amplifier during at least some intervals in which the switch is switched to an off state from an on state and is maintained in the off state.

For example, the pulse signal supply unit (pulse) may supply a signal having an increasing edge being synchronized with the switch SW converted from an on state to an off state, and a decreasing edge being synchronized with the switch SW converted from an off state to an on state to the second input end of the operation amplifier OP-amp.

Meanwhile, unknown parasitic capacitances Cpt and Cp0 are formed by various factors at the sensor pad 110_1. They may be formed by the relation between the sensor pads 110_1 and 110_2 and signal wiring, and may be formed by the relation between sensor pads 110_1 and 110_2. For example, when the first sensor pad 110_1 is the sensor pad currently subject to touch detection, parasitic capacitance Cpt formed by the relation with the neighboring second sensor pad 110_2 may be present. Also, parasitic capacitance Cp0 formed by the relation between the second sensor pad 110_2 and other circuit configurations may have an effect on detecting whether a touch is made at the first sensor pad 110_1.

Referring to Fig. 6, the operation of the apparatus for detecting touch illustrated in Fig. 5 is explained in the following.

In the timing diagram of switch SW in Fig. 6, the interval represented to be high is the interval where the switch SW is maintained in the on state, and the interval represented to be low is the interval where the switch SW is maintained in the off state. However, according to various circuit design examples, the switch SW may be turned on or off in a form where the timing diagram is inversed.

First, when the switch SW is in an on state during interval T1, the potential of both ends of the drive capacitance Cdrv connected between the first input end N3 and output end N4 of the operation amplifier OP-amp becomes the same. Accordingly, the voltage Vo of the output end of the operation amplifier OP-amp is 0 V. Also, the node N1 connected with the first sensor pad 110_1 subject to touch detection is connected with ground voltage, and thus the touch capacitance Ct connected with the first sensor pad 110_1 is reset as well.

As explained in the above, Fig. 5 illustrates that a switch SW is provided between the node N1 connected with the first sensor pad 110_1 and the ground voltage, but this may be omitted.

When the switch SW is in an on state, the pulse signal supply unit (pulse) supplies a low signal (for example, 0 V or ground signal) to the second input end of the operation amplifier OP-amp, and thus the potential of the first input end N3 of the operation amplifier OP-amp is maintained at a potential corresponding to low signal supplied by the pulse signal supply unit (pulse) while the switch SW is in the on state. That is, even if there is no switch SW switching the connection between the first sensor pad 110_1 and the ground voltage, the sensor pad 110_1 may be maintained at the potential of the signal applied to the second input end of the operation amplifier OP-amp (for example, ground voltage) while the switch SW is maintained in the on state.

Meanwhile, both the first input end and output end of the feedback operation amplifier OP-amp_fb are connected with the node N2 connected with the second sensor pad 110_2, and the second input end of the feedback operation amplifier OP-amp_fb is connected with the ground terminal. Thus, the feedback operation amplifier OP-amp_fb outputs a signal the same as the signal input to the second input end, and in Fig. 5, the node N2 connected with the second sensor pad 110_2 adjacent the first sensor pad 110_1 is maintained at ground voltage.

When two conductors are present having a dielectric substance therebetween, the amount of charge (Q) charged in the structure may be represented by an equation such as $Q=CV$ (here, C is the capacitance value of the corresponding structure, and V is the potential difference between the two conductors). Here, when the potential difference V of the two conductors is converged to be close to 0, the amount of charge (Q) drawn by the potential difference between the conductors is converged to be close to 0 as well. Also, the capacitance C increases in proportion to the charging ability of the charge. Thus, this means that when the amount of charge (Q) charged is close to 0, the capacitance C formed by the relation between conductors is converged to be close to 0. Thus, when the switch SW is in an on state, an effect of removing parasitic capacitance Cpt formed by the relation between the first sensor pad 110_1 and second sensor pad 110_2 may be obtained.

As the switch SW is switched to an off state from an on state in interval T2, the pulse signal supply unit (pulse) connected with the second input end of the operation amplifier OP-amp applies a pulse signal of increasing edge switched from low (ground voltage) to high (pulse signal voltage; Vp) simultaneously with or right after switching, as illustrated in Fig. 6.

The potential of the first input end N3 of the operation amplifier OP-amp is set to pulse signal voltage Vp during interval T2. When reaching steady state, touch capacitance Ct and parasitic capacitance Cpt get charged with pulse signal voltage Vp. Accordingly, the drive capacitance Cdrv is charged with the same amount of charge charged in the touch capacitance Ct and parasitic capacitance Cpt. The second sensor pad 110_2 is still maintained at ground voltage by the feedback operation amplifier OP-amp_fb, and thus may obtain an effect of removing the parasitic capacitance Cp0 connected therewith.

When driving capacitance Cdrv is charged with charge, the voltage Vo of the output end of the operation amplifier OP-amp increases. The amount of increase is related to touch capacitance Ct, and thus whether a touch is made at the first sensor pad 110_1 may be determined according to the amount of change in voltage Vo of the output end of the operation amplifier OP-amp.

During interval T3, the pulse signal supply unit (pulse) applies a pulse signal of the decreasing edge switching from high (pulse signal voltage; Vp) to low, and the switch SW is switched to the on state.

According to the apparatus for detecting touch illustrated in Fig. 5, operation of detecting a touch may be performed with a smaller number of switches than that included in the circuit illustrated in Fig. 3.

However, when a pulse signal is supplied by the pulse signal supply unit (pulse), there is a potential difference between the first sensor pad 110_1 and second sensor pad 110_2, and accordingly, the parasitic capacitance Cpt between the first node N1 and second node N2 affects touch detection.

Meanwhile, the timing diagram illustrated in Fig. 6 exemplifies the case of implementing a pulse signal from the pulse signal supply unit (pulse) in a step function, but the pulse signal may be implemented in an increasing form having a predetermined slope. In fact, there is a limitation in the maximum size of current that can flow in a circuit, and a limitation in the performance of an operation amplifier OP-amp. Thus, the pulse signal may be implemented to increase with a predetermined slope. In this case, frequency response to an edge area (transition region) of a pulse signal may be configured in a predetermined range so as to prevent overshoot during feedback response of the operation amplifier OP-amp.

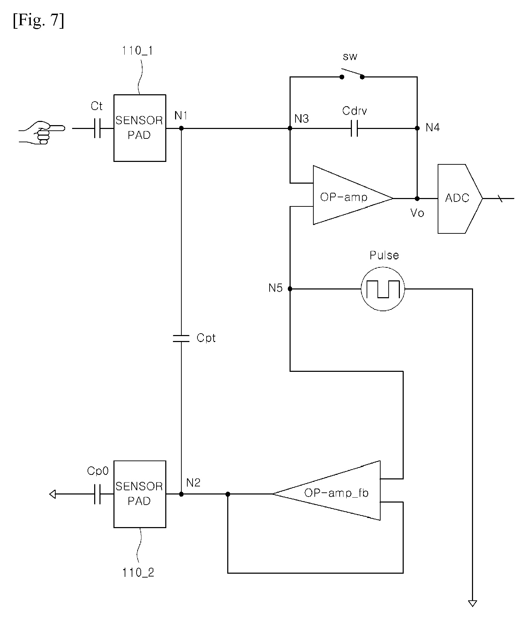

Fig. 7 is a circuit diagram for explaining the operation of an apparatus for detecting touch according to another embodiment of the present invention.

Referring to Fig. 7, the difference from the apparatus for detecting touch in Fig. 5 is that the pulse signal supply unit (pulse) supplies pulse signal to both the second input end of the operation amplifier OP-amp connected with a first sensor pad 110_1 subject to touch detection, and a first input end of the feedback operation amplifier OP-amp_fb connected with the second sensor pad 110_2 adjacent the first sensor pad 110_1. That is, the first input end of the feedback operation amplifier OP-amp_fb is connected with the pulse signal supply unit (pulse) and the second input end is connected with the second sensor pad 110_2 together with the output end.

Meanwhile, Fig. 7 is illustrated omitting the switch SW connected with the first node N1.

The operation of touch detection of the apparatus for detecting touch illustrated in Fig. 7 is similar to that explained with reference to Fig. 5 and Fig. 6.

First, while the switch SW is in an on state, the drive capacitance Cdrv is reset, and the voltage Vo of the output end of the operation amplifier OP-amp is maintained at ground voltage. In this case, the pulse signal supply unit (pulse) supplies a low signal (for example, 0 V), and thus the first node N1 and second node N2 are both maintained to be the same as ground voltage. Accordingly, there is an effect of removing parasitic capacitance Cpt formed by the relation between the first sensor pad 110_1 and the second sensor pad 110_2.

Meanwhile, when the switch SW is switched to an off state, a pulse signal is supplied by the pulse signal supply unit (pulse). The pulse signal supply unit (pulse) is connected with the second input end N5 of the operation amplifier OP-amp and the first input end N5 of the feedback operation amplifier OP-amp_fb. Also, the second input end of the feedback operation amplifier OP-amp_fb is connected with the node N2 connected with the second sensor pad 110_2 together with the output end, thereby outputting a signal the same as that supplied through the first input end N5. Thus, the first node N1 and second node N2 both increase in potential by the pulse signal voltage Vp supplied from the pulse signal supply unit (pulse). That is, the potential of the first node N1 connected with the first sensor pad 110_1 and the second node N2 connected with the second sensor pad 110_1 is always maintained at the same potential regardless of whether the switch SW is in an on state or an off state. Thus, there is an effect of removing the parasitic capacitance Cpt formed between the first node N1 and second node N2.

That is, the effect of the parasitic capacitance which was a problem in the apparatus for detecting touch in Fig. 5, that is the parasitic capacitance Cpt formed by the relation between the first sensor pad 110_1 subject to touch detection and the adjacent second sensor pad 110_2 may be removed.

Except that the pulse signal supply unit (pulse) is connected with the first input end of the feedback operation amplifier OP-amp_fb, its operation is the same as the apparatus for detecting touch explained with reference to Fig. 5. Thus, detailed description on its operation is omitted.

Meanwhile, with regard to the apparatus for detecting touch illustrated in Fig. 7, although the effect of parasitic capacitance Cpt formed by the relation between the first sensor pad 110_1 and the second sensor pad 110_2 may be removed, the potential of the second sensor pad 110_2 varies by the pulse signal from the pulse signal supply unit (pulse). Thus, the effect of the parasitic capacitance Cp0 connected with the second sensor pad 110_2, that is the parasitic capacitance Cp0 formed by a circuit configuration other than the first sensor pad 110_1 subject to touch detection has not been removed completely.

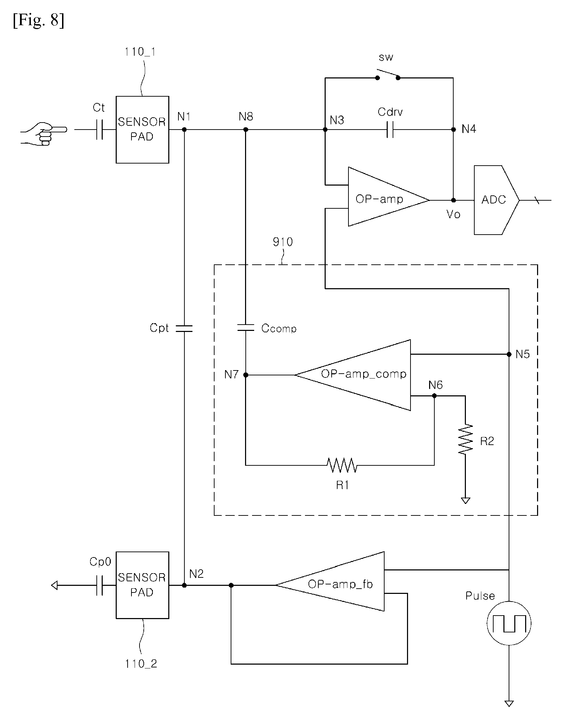

Fig. 8 is a circuit diagram for explaining the operation of an apparatus for detecting touch according to yet another embodiment of the present invention.

Referring to Fig. 8, it can be understood that the apparatus for detecting touch illustrated in Fig. 7 further includes a parasitic capacitance compensation circuit 910.

The parasitic capacitance compensation circuit 910 may include a compensation amplifier OP-amp_comp.

The first input end N5 of the compensation amplifier OP-amp_comp is connected with the second input end of the operation amplifier OP-amp and the pulse signal supply unit (pulse). The compensation amplifier OP-amp_comp outputs a pulse signal by amplifying the pulse signal from the pulse signal supply unit (pulse). To this end, a first resistance R1 is connected between the second input end N6 and the output end of the compensation amplifier OP-amp_comp, and a second resistance R2 is connected between the second input end N6 of the compensation amplifier OP-amp_comp and ground voltage.

The output end N7 of the compensation amplifier OP-amp_comp is connected with the first node N1 connected with the first sensor pad 110_1 subject to touch detection and the first input end N3 of the operation amplifier OP-amp, with a compensation capacitance Ccomp placed therebetween.

The operation of the apparatus for detecting touch illustrated in Fig. 8 is explained in the following.

Drive capacitance Cdrv is reset while the switch SW is maintained in an on state and the pulse signal supply unit (pulse) supplies low signal (for example, 0 V). Also, the first input end N5 of the compensation amplifier OP-amp_comp is maintained at ground voltage, and thus the output end N7 of the compensation amplifier OP-amp_comp is maintained at ground voltage as well. Meanwhile, the first input end N3 of the operation amplifier OP-amp becomes the ground voltage. The potential of both ends of the compensation capacitance Ccomp is the same, and thus the compensation capacitance Ccomp is reset.

When the switch SW is switched to an off state, a signal having a predetermined potential is supplied from the pulse signal supply unit (pulse). The signal is input to the second input end N5 of the operation amplifier OP-amp and the first input end N5 of the compensation amplifier OP-amp_comp. Accordingly, the potential of the first input end N3 of the operation amplifier OP-amp and the second input end N6 of the compensation amplifier OP-amp_comp becomes the same as the potential of the pulse signal supplied by the pulse signal supply unit (pulse).

The voltage of the output end N7 of the compensation amplifier OP-amp_comp may be K times the voltage of the second input end N6, and the K value may vary depending on the resistance value of the first resistance R1 and second resistance R2. When the potential of the pulse signal is represented by Vp, the voltage of the output end N7 of the compensation amplifier OP-amp_comp may be represented by a value amplifying the pulse signal by K times, i.e., K·Vp.

The potential of the first input end N3 of the operation amplifier OP-amp is the same as the potential Vp of the pulse signal. Thus, the potential difference Vcomp of both ends of the compensation capacitance Ccomp may be represented by the following equation.

Equation 4

$$Vcomp = Vp(K-1)$$

When reaching steady state, the touch capacitance Ct and parasitic capacitance Cpt and Cp0 become charged by the pulse signal. Accordingly, the sum of the charge charged at the touch capacitance Ct and the parasitic capacitance Cpt and Cp0 becomes the same as the sum of the charge charged in the drive capacitance Cdrv and compensation capacitance Ccomp. This may be represented by the following equation.

Equation 5

$$Vp(Ct+Cpt+Cp0)=(Vcomp\ Ccomp)+(Vdrv\ Cdrv)$$

When Equation 5 is substituted by Equation 4, the following equation may be derived.

Equation 6

$$Vdrv=\frac{Vp\{Ct+Cpt+Cp0-(K-1)Ccomp\}}{Cdrv}$$

When the switch SW is in an on state, the potential of both ends of the drive capacitance Cdrv is ground voltage. Thus, the voltage Vdrv of both ends of the drive capacitance Cdrv is related to the level shift value ΔVo.

Referring to Equation 6, when the "Cpt+Cp0" value and "(K-1)Ccomp" value become the same by controlling the K value and compensation capacitance Ccomp value, the effect of parasitic capacitance Cpt and Cp0 may be removed completely. In this regard, the parasitic capacitance compensation circuit 910 supplies charge to at least one of the touch capacitance Ct or parasitic capacitance Cpt and Cp0 while the switch CW is in off state. Here, when the elements of the parasitic capacitance compensation circuit 910 are properly controlled, there may be an effect that the parasitic capacitance compensation circuit 910 supplies all the amount of charge charged in the parasitic capacitance Cpt and Cp0. Accordingly, the effect of parasitic capacitance Cpt and Cp0 may be removed while detecting touch.

As explained above, the K value may be controlled by the first resistance R1 and second resistance R2 values, and the compensation capacitance Ccomp value may be controlled in circuit design. Thus, according to the apparatus for detecting touch illustrated in Fig. 8, all effect of parasitic capacitance may be removed. Further, the first sensor pad 110_1 subject to touch detection and second sensor pad 110_2 adjacent thereto are always maintained at the same potential. Thus, the effect of the parasitic capacitance Cpt formed by the relation between the first sensor pad 110_1 and second sensor pad 110_2 may be neglected in Equation 6.

Although the exemplary embodiments of the present invention have been disclosed for illustrative purposes, those skilled in the art will appreciate that various modifications, additions and substitutions are possible, without departing from the scope and spirit of the present invention as disclosed in the accompanying claims. Therefore, it should be understood that the forgoing description is by way of example only, and is not intended to limit the present invention. For example, each constituent explained in singular form may be carried out being dispersed, and likewise, constituents explained as being dispersed may be carried out in combined forms.

The scope of the present invention is defined by the foregoing claims, and it is intended that the present invention covers the modifications or variations of the present invention provided they come within the scope of the appended claims and their equivalents.

**Claims**

1. An apparatus for detecting touch, the apparatus comprising:

   a plurality of sensor pads for forming touch capacitance in relation to a touch input tool;
   an operation amplifier for outputting different signals according to whether a touch is made, the operation amplifier having a first input end connected with a first sensor pad selected from the sensor pads;
   driving capacitance connected between the first input end and an output end of the operation amplifier, potentials of both ends of the operation amplifier being controlled by a switch; and
   a pulse signal supply unit for supplying a signal having a predetermined potential to a second input end of the operation amplifier during at least some intervals in which the switch is switched to an off state from an on state and is maintained in the off state.

2. The apparatus according to claim 1, further comprising a parasitic capacitance compensation circuit for supplying charge to at least one of the touch capacitance or the parasitic capacitance sharing the amount of charge of the touch capacitance when the switch is in the off state.

3. The apparatus according to claim 2, wherein the amount of charge supplied by the parasitic capacitance compensation circuit is the same as the amount of charge charged in the parasitic capacitance when the switch is in the off state.

4. The apparatus according to claim 2, wherein the parasitic capacitance compensation circuit comprises: a compensation amplifier for amplifying and outputting a pulse signal from the pulse signal supply unit; and compensation capacitance connected between an output end of the compensation amplifier and a first input end of the operation amplifier.

5. The apparatus according to claim 4, wherein the pulse signal input unit is connected with a first input end of the compensation amplifier, a first resistance is connected between a second input end and an output end of the compensation amplifier, and a second resistance is connected between a second input end of the compensation amplifier and a ground voltage.

6. The apparatus according to claim 1, wherein the pulse signal supply unit simultaneously supplies the pulse signal to a second input end of the operation amplifier and a second sensor pad adjacent the first sensor pad.

7. The apparatus according to claim 6, further comprising a feedback operation amplifier for outputting a signal the same as the input signal, an output end thereof being connected with the second sensor pad, and the pulse signal supply unit being simultaneously connected with a second input end of the operation amplifier and a first input end of the feedback operation amplifier.

8. The apparatus according to claim 1, wherein an additional switch operating in synchronization with the switch is connected between the first sensor pad and the ground.

9. An apparatus for detecting touch, the apparatus comprising:

   a plurality of sensor pads for forming touch capacitance in relation to a touch input tool;
   an operation amplifier for outputting different signals according to whether a touch is made, the operation amplifier having a first input end connected with a first sensor pad selected from the sensor pads;
   driving capacitance connected between the first input end and an output end of the operation amplifier, potentials of both ends of the operation amplifier being controlled by a switch;
   a feedback operation amplifier for outputting a signal the same as the input signal, an output end thereof being connected with a second sensor pad adjacent the first sensor pad; and
   a pulse signal supply unit for supplying a signal having a predetermined potential to a second input end of the operation amplifier and an input end of the feedback operation amplifier during at least some intervals in which the switch is switched to an off state from an on state and is maintained in the off state.

10. The apparatus according to claim 9, wherein an input end of the feedback operation amplifier is connected with the pulse signal supply unit, and a second input end is connected with the second sensor pad together with an output end.

[Fig. 1]

[Fig. 2]

[Fig. 3]

[Fig. 4]

[Fig. 5]

[Fig. 6]

[Fig. 7]

[Fig. 8]

## INTERNATIONAL SEARCH REPORT

| International application No. |
|---|
| **PCT/KR2014/004695** |

**A. CLASSIFICATION OF SUBJECT MATTER**

*G06F 3/044(2006.01)i*

According to International Patent Classification (IPC) or to both national classification and IPC

**B. FIELDS SEARCHED**

Minimum documentation searched (classification system followed by classification symbols)
G06F 3/044; G06F 3/03; G06F 3/045; G06F 3/041; H01L 31/042

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: sensor pad, amplifier, switch, parasitic capacitance, pulse

**C. DOCUMENTS CONSIDERED TO BE RELEVANT**

| Category* | Citation of document, with indication, where appropriate, of the relevant passages | Relevant to claim No. |
|---|---|---|
| A | KR 10-1190836 B1 (CRUCIALTEC CO., LTD.) 12 October 2012<br>See paragraphs [0019], [0031], [0097]; and figures 3, 5. | 1-10 |
| A | KR 10-1085089 B1 (LEE, Sung Ho) 18 November 2011<br>See paragraphs [0016], [0145]; and figures 11a-11b. | 1-10 |
| A | US 2010-0134438 A1 (YU, Jae-Suk et al.) 03 June 2010<br>See paragraphs [0012], [0029]; and figure 1. | 1-10 |
| A | US 2011-0090173 A1 (HUANG, Yen-Lin et al.) 21 April 2011<br>See paragraph [0018]; and figure 8A. | 1-10 |
| A | WO 2009-096712 A2 (MELFAS INC.) 06 August 2009<br>See paragraph [0007]; and figure 4. | 1-10 |

| ☐ Further documents are listed in the continuation of Box C. | ☒ See patent family annex. |
|---|---|

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 27 AUGUST 2014 (27.08.2014) | **27 AUGUST 2014 (27.08.2014)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea | |
| Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2014/004695**

| Patent document cited in search report | Publication date | Patent family member | Publication date |
|---|---|---|---|
| KR 10-1190836 B1 | 12/10/2012 | WO 2013-115599 A1 | 08/08/2013 |
| KR 10-1085089 B1 | 18/11/2011 | KR 10-1085088 B1 | 18/11/2011 |
| | | US 2013-0162595 A1 | 27/06/2013 |
| | | WO 2012-030183 A2 | 08/03/2012 |
| | | WO 2012-030183 A3 | 26/04/2012 |
| US 2010-0134438 A1 | 03/06/2010 | KR 10-2010-0062217 A | 10/06/2010 |
| | | TW 201025850 A | 01/07/2010 |
| | | US 08643609 B2 | 04/02/2014 |
| US 2011-0090173 A1 | 21/04/2011 | JP 2011-086297 A | 28/04/2011 |
| | | JP 5092110 B2 | 05/12/2012 |
| | | TW 201115438 A | 01/05/2011 |
| | | TW I410849 B | 01/10/2013 |
| | | US 8681110 B2 | 25/03/2014 |
| WO 2009-096712 A2 | 06/08/2009 | EP 2267791 A2 | 29/12/2010 |
| | | EP 2267791 A4 | 18/07/2012 |
| | | KR 10-0956451 B1 | 06/05/2010 |
| | | KR 10-2009-0083295 A | 03/08/2009 |
| | | US 2011-0063247 A1 | 17/03/2011 |
| | | WO 2009-096712 A3 | 05/11/2009 |

Form PCT/ISA/210 (patent family annex) (July 2009)